(19) Europäisches Patentamt
European Patent Office
Office européen des brevets

(11) **EP 4 553 914 A1**

(12) **EUROPEAN PATENT APPLICATION**

(43) Date of publication:
**14.05.2025 Bulletin 2025/20**

(21) Application number: **24211241.5**

(22) Date of filing: **06.11.2024**

(51) International Patent Classification (IPC):
***H01M 4/13*** *(2010.01)* ***H01M 4/62*** *(2006.01)*
***H01M 10/0525*** *(2010.01)* *H01M 4/1397 (2010.01)*
*H01M 4/04 (2006.01)* *H01M 4/131 (2010.01)*
*H01M 4/133 (2010.01)* *H01M 4/134 (2010.01)*
*H01M 4/136 (2010.01)* *H01M 4/1391 (2010.01)*
*H01M 4/1393 (2010.01)* *H01M 4/36 (2006.01)*
*H01M 4/02 (2006.01)* *H01M 4/38 (2006.01)*
*H01M 4/1395 (2010.01)*

(52) Cooperative Patent Classification (CPC):
**H01M 4/622; H01M 4/134; H01M 4/62; H01M 10/0525; H01M 10/4235; H01M 50/42; H01M 50/431; H01M 50/446; H01M 50/46;**
H01M 4/0404; H01M 4/133; H01M 4/1393; H01M 4/1395; H01M 4/364; H01M 4/366; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2023 KR 20230152968**

(71) Applicant: **SAMSUNG SDI CO., LTD.**
**Yongin-si, Gyeonggi-do 17084 (KR)**

(72) Inventors:
- **LEE, Jungmin**
  **17084 Yongin-si (KR)**
- **JUNG, Kyunghwa**
  **17084 Yongin-si (KR)**
- **LEE, Kukjoo**
  **17084 Yongin-si (KR)**
- **SONG, Hyo-jung**
  **17084 Yongin-si (KR)**
- **CHO, Minho**
  **17084 Yongin-si (KR)**
- **CHO, Yunshik**
  **17084 Yongin-si (KR)**
- **KIM, Hana**
  **17084 Yongin-si (KR)**

(74) Representative: **Michalski Hüttermann & Partner Patentanwälte mbB**
**Kaistraße 16A**
**40221 Düsseldorf (DE)**

(54) **NEGATIVE ELECTRODE FOR RECHARGEABLE LITHIUM BATTERY AND RECHARGEABLE LITHIUM BATTERY INCLUDING THE SAME**

(57) A negative electrode for a rechargeable lithium battery includes a current collector, a negative electrode active material layer on the current collector, and an organic-inorganic composite layer on the negative electrode active material layer and integrated with the negative electrode active material layer. The negative electrode active material layer includes a negative electrode active material and a first binder, the organic-inorganic composite layer includes a second binder, and the first binder and the second binder include a copolymer including a structural unit derived from a (meth)acrylonitrile monomer.

FIG. 1

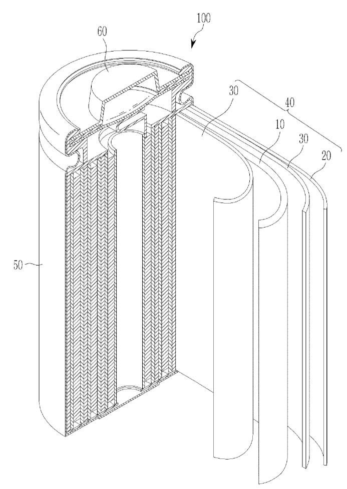


EP 4 553 914 A1

(52) Cooperative Patent Classification (CPC): (Cont.)
H01M 4/386; H01M 2004/027

## Description

## BACKGROUND OF THE INVENTION

### (a) Field of the Invention

Negative electrodes for rechargeable lithium batteries, and rechargeable lithium batteries including the negative electrodes are disclosed.

### (b) Description of the Related Art

With the increased spread of electronic devices that use batteries, such as, e.g., mobile phones, laptop computers, electric vehicles, and the like, the demand for rechargeable lithium batteries with high energy density and high capacity is rapidly increasing. Accordingly, research and development to improve the performance of rechargeable lithium batteries is actively underway.

Rechargeable lithium batteries include a positive electrode and a negative electrode that has an active material capable of intercalating and deintercalating lithium ions, and an electrolyte solution, and generate electrical energy through oxidation and reduction reactions when lithium ions are intercalated and deintercalated from the positive electrode and the negative electrode.

An example of a method for increasing the capacity of a lithium ion rechargeable battery utilizes an active material containing Si (silicon) for the negative electrode. When an active material includes Si, which has a greater amount of lithium intercalation/deintercalation than conventional graphite-based active materials, is applied, improvement in battery capacity may occur. However, because the silicon-containing active material has a large volume change accompanying lithium intercalation/deintercalation, the negative electrode active material layer substantially expands and contracts during charging and discharging. As a result, the electronic conductivity between the negative electrode active materials may be reduced, a conductive path between the negative electrode active materials and the current collector may be hindered or blocked, and the cycle characteristics of the rechargeable battery may deteriorate.

## SUMMARY OF THE INVENTION

Some example embodiments include a negative electrode for a rechargeable lithium battery with improved adhesive force and improved heat shrinkage rate.

Some example embodiments include a rechargeable lithium battery including the negative electrode and exhibiting desired, improved or advantageous rate capability and cycle-life characteristics.

In some example embodiments, a negative electrode for a rechargeable lithium battery includes a current collector, a negative electrode active material layer on the current collector, and an organic-inorganic composite layer on the negative electrode active material layer and integrated with the negative electrode active material layer, wherein the negative electrode active material layer includes a negative electrode active material layer and a first binder. The organic-inorganic composite layer includes a second binder, and the first binder and the second binder include a copolymer including a structural unit derived from a (meth)acrylonitrile monomer.

Some example embodiments include a rechargeable lithium battery including the negative electrode, a positive electrode, and an electrolyte.

The negative electrode for a rechargeable lithium battery according to some example embodiments may have improved adhesive force and improved heat shrinkage rate.

The rechargeable lithium battery according to some example embodiments may exhibit desired, improved or advantageous rate capability and cycle-life characteristics.

## BRIEF DESCRIPTION OF THE DRAWINGS

FIGS. 1 to 4 are cross-sectional views schematically showing rechargeable lithium batteries, according to some example embodiments.

## DETAILED DESCRIPTION OF THE EMBODIMENTS

Hereinafter, example embodiments of the present invention will be described in detail. However, these embodiments are examples, the present invention is not limited thereto and the present invention is defined by the scope of claims.

As used herein, when a specific definition is not otherwise provided, it may be understood that when an element

such as a layer, film, region, or substrate is referred to as being "on" another element, it can be directly on the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, and a reaction product of constituents.

As used herein, when a definition is not otherwise provided, a particle diameter may be an average particle diameter. The particle diameter means an average particle diameter (D50), which is a diameter of particles with a cumulative volume of 50 volume% in the particle size distribution. The average particle diameter (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range. From this, the average particle diameter (D50) value may be easily obtained through a calculation. A laser diffraction method may also be used. When measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle size (D50) based on 50% of the particle size distribution in the measuring device can be calculated.

As used herein, when a definition is not otherwise provided, "substituted" refers to replacement of at least one hydrogen of a compound by a substituent selected from a C1 to C30 alkyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR' wherein R and R' are each independently hydrogen or a C1 to C6 alkyl group), a sulfobetaine group ($-RR'N^+(CH_2)_nSO_3^-$), a carboxybetaine group ($-RR'N^+(CH_2)_nCOO^-$, wherein R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$, an aldehyde group (-C(=O)H), a carbamoyl group ($-C(O)NH_2$), a thiol group (-SH), an ester group (-C(=O)OR, wherein R is a C1 to C6 alkyl group or a C6 to C12 aryl group), a carboxyl group (-COOH) or a salt thereof (-C(=O)OM, wherein M is an organic or inorganic cation), a sulfonic acid group (-SOsH) or a salt thereof (-SOsM, wherein M is an organic or inorganic cation), a phosphoric acid group ($-PO_3H_2$) or a salt thereof (-POsMH or $-PO_3M_2$, wherein M is an organic or inorganic cation), and a combination thereof.

Hereinafter, C1 to C3 alkyl group refers to a methyl group, an ethyl group, or a propyl group. The C1 to C10 alkylene group may be or include, for example, a C1 to C6 alkylene group, a C1 to C5 alkylene group, or a C1 to C3 alkylene group, and may be or include, for example, a methylene group, an ethylene group, or a propylene group. The C3 to C20 cycloalkylene group may be or include, for example, a C3 to C10 cycloalkylene group, or a C5 to C10 alkylene group, for example, a cyclohexylene group. The C6 to C20 arylene group may be or include, for example, a C6 to C10 arylene group, for example, a benzylene group or a phenylene group. The C3 to C20 heterocyclic group may be or include, for example, a C3 to C10 heterocyclic group, for example, a pyridine group.

Hereinafter, "hetero" refers to including one or more heteroatoms selected from at least N, O, S, Si, and P.

Additionally, in a chemical formula, the symbol * refers to a portion that is linked to the same or different atom, group, or unit.

As used herein, when a definition is not otherwise provided, "copolymerization" refers to block copolymerization, random copolymerization, graft copolymerization, or alternate copolymerization, and "copolymer" refers to a block copolymer, a random copolymer, a graft copolymer, or an alternate copolymer.

When the terms "about" or "substantially" are used in this specification in connection with a numerical value, it is intended that the associated numerical value include a tolerance of $\pm$10% around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

## Negative Electrode

The negative electrode for a rechargeable lithium battery according to some example embodiments includes a current collector, a negative electrode active material layer on the current collector, and an organic-inorganic composite layer on the negative electrode active material layer and integrated with the negative electrode active material layer.

The negative electrode active material layer includes a negative electrode active material and a first binder, the organic-inorganic composite layer includes inorganic particles and a second binder, and the first binder and the second binder include a copolymer including a structural unit derived from a (meth)acrylonitrile monomer.

In the negative electrode for the rechargeable lithium battery, by applying a binder including a copolymer

including the structural unit derived from the same (meth)acrylonitrile monomer to the negative electrode active material layer and the organic-inorganic composite layer, an adhesive strength between the negative electrode active material layer and the current collector may be improved and by increasing and arranging the organic-inorganic composite layer, thermal contraction and expansion of the negative electrode active material may be reduced or prevented to increase safety of the rechargeable battery.

In the case of the binder including the aforementioned copolymer including the structural unit derived from the (meth)acrylonitrile monomer, the modulus is higher than that of other acrylic compounds, so that the expansion of the negative electrode active material may be reduced due to low deformation, and adhesive strength may be improved.

## First Binder

The first binder is included in the negative electrode active material layer and plays a role in adhering the negative electrode active material particles to each other and also adhering the negative electrode active material to the current collector.

The first binder includes the copolymer including the structural unit derived from the (meth)acrylonitrile monomer.

The structural unit derived from a (meth)acrylonitrile monomer may refer to a repeating unit of a polymer formed by a polymerization reaction of the (meth)acrylonitrile monomer, or may refer to a repeating unit including a nitrile group.

As an example, the first binder may include a copolymer (A) including at least one of a structural unit (a-1) derived from a (meth)acrylonitrile monomer and a structural unit (a-2) derived from a (meth)acrylic acid-based monomer.

Based on 100 wt% of the copolymer (A), the structural unit (a-1) derived from the (meth)acrylonitrile monomer may be included in an amount of about 35 wt% to about 65 wt%.

When a content of the structural unit (a-1) derived from the (meth)acrylonitrile monomer is less than about 35 wt% based on 100 wt% of the copolymer (A), the adhesive strength between the negative electrode active material layer and the current collector may decrease, and when the content exceeds 65 wt%, the copolymer (A) has water-insoluble properties, which may reduce dispersibility of the negative electrode active material and worsen storage stability of the negative electrode slurry.

Based on 100 wt% of the copolymer (A), the structural unit (a-2) derived from the (meth)acrylic acid-based monomer may be included in an amount of about 35 wt% to about 65 wt%.

When a content of the structural unit (a-2) derived from the (meth)acrylic acid-based monomer is less than about 35 wt% based on 100 wt% of the copolymer (A), the structural unit may be undesirable as a negative electrode due to water-insoluble characteristics, the dispersibility of the active material may be reduced, and storage stability of the negative electrode slurry may deteriorate, and when the content exceeds 65 wt%, cracks may occur in the electrode (negative electrode) during coating and drying of the negative electrode slurry, making it difficult to manufacture the negative electrode.

As an example, the structural unit derived from the (meth)acrylonitrile monomer may be represented by Chemical Formula 1.

[Chemical Formula 1]

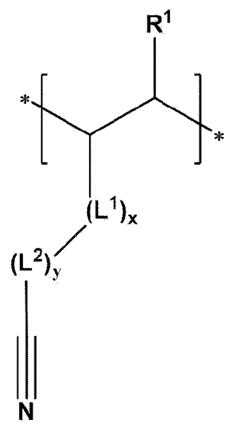

In Chemical Formula 1, R' is hydrogen or a C1 to C3 alkyl group, $L^1$ is - C(=O)-, -C(=O)O-, -OC(=O)-, -O-, or -C(=O)NH-, $L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, x is an integer of 0 to 2, and y is an integer of 0 to 2.

As an example, the structural unit derived from the (meth)acrylonitrile monomer may be or include a unit derived from (meth)acrylonitrile, alkenenitrile, cyanoalkyl (meth)acrylate, or 2-(vinyloxy)alkanenitrile.

Herein, the alkene may be or include a C1 to C20 alkene, a C1 to C10 alkene, or a C1 to C6 alkene, the alkyl may be or include a C1 to C20 alkyl, a C1 to C10 alkyl, or a C1 to C6 alkyl, and the alkane may be or include a C1 to C10 C20 alkane, a C1 to C10 alkane, or a C1 to C6 alkane.

The alkenenitrile may be or include, for example, allyl cyanide, 4-pentenenitrile, 3-pentenenitrile, 2-pentenenitrile, or 5-hexenenitrile.

The cyanoalkyl (meth)acrylate may be or include, for example, cyanomethyl (meth)acrylate, cyanoethyl (meth) acrylate, cyanopropyl (meth)acrylate, or cyanooctyl (meth)acrylate.

The 2-(vinyloxy)alkanenitrile may be or include, for example, 2-(vinyloxy)ethanenitrile, or 2-(vinyloxy)propanenitrile.

As an example, the (meth)acrylic acid-based monomer may include (meth)acrylic acid, an alkali metal salt of (meth)acrylic acid, an ammonium salt of (meth)acrylic acid, or a combination thereof.

As an example, the (meth)acrylic acid may include acrylic acid or methacrylic acid.

As an example, the alkali metal salt of (meth)acrylate may include sodium acrylate, lithium acrylate, potassium acrylate, calcium acrylate, magnesium acrylate, sodium methacrylate, lithium methacrylate, potassium methacrylate, calcium methacrylate, or a combination thereof, and another example may be sodium acrylate.

As an example, the ammonium salt of (meth)acrylic acid may include an ammonia-neutralized product of (meth) acrylic acid, a monoethanolamineneutralized product, a diethanolamine-neutralized product, a hydroxylamineneutralized product, or a combination thereof and another example may be or include an ammonia-neutralized product of acrylic acid.

In the negative electrode active material layer prepared using the first binder including the copolymer (A), even when the negative electrode active material layer is charged/discharged repeatedly, because the copolymer (A) can follow expansion and contraction of the Si (silicon)-based active material and/or Sn (tin)-based active material, peeling off of the electrode layer can be reduced or suppressed, and as a result, cycle-life can be improved.

As an example, the copolymer (A) may further include structural units derived from the (meth)acrylonitrile monomer and/or other monomers copolymerizable with the (meth)acrylic acid-based monomer. Based on 100 wt% of the copolymer (A), the other monomers may be included in an amount of about 0 wt% to about 10 wt%. When the content of the other monomers relative to 100 wt% of the copolymer (A) is as described above, the cycle-life and output characteristics of the rechargeable lithium battery can be further improved.

The other monomer may include a hydroxyl group-containing monomer or an amide group-containing monomer.

For example, the hydroxyl group-containing monomer may be 2-hydroxyethyl(meth)acrylate, 2-hydroxypropyl(meth)acrylate, 4-hydroxybutyl(meth)acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methylacrylate, N-methylol(meth)acrylamide, N-hydroxy(meth)acrylamide, vinylalcohol, allylalcohol, 2-hydroxyethylvinylether, 4-hydroxybutylvinylether, diethylene glycolmonovinylether, and the like.

Examples of the amide group-containing monomer may include acrylamide, methacrylamide, diethyl(meth) acrylamide, N-vinylpyrrolidone, N-vinyl-2-pyrrolidone, N-(meth)acryloylpyrrolidone, N,N-dimethylacrylamide, N,N-dimethylmethacrylamide, N,N-diethyl acrylamide, N,N-diethylmethacrylamide, N,N'-methylenebisacrylamide, N,N-dimethylaminopropylacrylamide, N,N-dimethylaminopropylmethacrylamide, and the like.

The first binder may further include a binder selected from a styrene-butadiene rubber, a (meth)acrylated styrene-butadiene rubber, a (meth)acrylonitrile-butadiene rubber, a (meth)acrylic rubber, a butyl rubber, polyethylene oxide, polyvinylpyrrolidone, polyepichlorohydrin, polyphosphazene, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

## Negative Electrode Active Material Layer

The negative electrode active material layer may include a negative electrode active material and the first binder, and may further include a conductive material.

The negative electrode active material may include a material capable of reversibly intercalating/deintercalating lithium ions, a lithium metal, an alloy of lithium metal, a material capable of doping and dedoping lithium, or a transition metal oxide.

The material capable of reversibly intercalating/deintercalating the lithium ions may be or include a carbon-based negative electrode active material, and may include, for example, crystalline carbon, amorphous carbon, or a combination thereof. The crystalline carbon may be irregular, or plate, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal from at least one of Na, K, Rb, Cs, Fr, Be, Mg, Ca, Sr,

Si, Sb, Pb, In, Zn, Ba, Ra, Ge, Al, and Sn.

The material capable of doping/dedoping lithium may be or include a Si-based negative electrode active material or a Sn-based negative electrode active material.

The Si-based negative electrode active material may be silicon, a silicon-carbon composite, $SiO_x$ ($0 < x < 2$), a Si-Q alloy (wherein Q is selected from an alkali metal, an alkaline-earth metal, a Group 13 element, a Group 14 element excepting Si, a Group 15 element, a Group 16 element, a transition metal, a rare earth element, and a combination thereof).

The Sn-based negative electrode active material may be Sn, $SnO_2$, a Sn-based alloy, or a combination thereof.

The silicon-carbon composite may be or include a composite of silicon and amorphous carbon. According to some example embodiments, the silicon-carbon composite may include silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The silicon-carbon composite may be in a form of particles, and an average particle diameter ($D_{50}$) thereof may be, for example, about 0.5 μm to about 20 μm. Herein, the average particle diameter is measured with a particle size analyzer and may refer to a diameter of particles with a cumulative volume of 50 volume% in the particle size distribution. Based on 100 wt% of the silicon-carbon composite, silicon may be included in an amount of about 10 wt% to about 60 wt% and carbon may be included in an amount of about 40 wt% to about 90 wt%.

The silicon-carbon composite may include voids in the central portion of the particle. A radius of the void may be about 30 length% to about 50 length% of the radius of the silicon-carbon composite particle.

The silicon-carbon composite particle may effectively reduce or suppress problems such as volume expansion, structural collapse, or particle crushing due to charging and discharging, reducing or preventing disconnection of conductive paths, realizing high capacity and high efficiency, and can be used under high voltage or high-rate charging conditions.

The Si-based negative electrode active material or Sn-based negative electrode active material may be used by mixing with a carbon-based negative electrode active material.

In some example embodiments, the negative electrode active material may include a carbon-based negative electrode active material and a Si-based negative electrode active material. Herein, the Si-based negative electrode active material may be included in an amount of about 0.1 wt% to about 10 wt%, for example about 0.5 wt% to about 7 wt%, or about 1 wt% to about 4 wt%, based on 100 wt% of the total negative electrode active material. When the Si-based negative active material satisfies the above content range, high capacity can be achieved while improving battery cycle-life characteristics without increasing resistance.

For example, the negative electrode active material layer may include about 90 wt% to about 99 wt% of the negative electrode active material, about 0.5 wt% to about 5 wt% of the first binder, and about 0 wt% to about 5 wt% of the conductive material.

The conductive material may be used to provide conductivity to the electrode, and in the battery being constructed, any electronically conductive material can be used as long as the electronically conductive material does not cause chemical change. Examples of the conductive material include at least one of a carbon-based material such as, e.g., at least one of natural graphite, artificial graphite, carbon black, acetylene black, ketjen black, a carbon fiber, a carbon nanotube, and the like; a metal-based material in the form of, e.g., a metal powder or a metal fiber including at least one of copper, nickel, aluminum silver, and the like; a conductive polymer such as, e.g., a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

## Second Binder

The second binder may be included in the organic-inorganic composite layer and is included in the composition for forming the inorganic layer included in the organic-inorganic composite layer, and may be configured to disperse the inorganic particles and ensure that the organic-inorganic composite layer is well integrated into the negative electrode active material layer.

The second binder may include a copolymer (B) including a structural unit (b-1) derived from a (meth)acrylonitrile monomer.

Based on 100 wt% of the copolymer (B), the structural unit (b-1) derived from the (meth)acrylonitrile monomer

may be included in an amount of about 35 wt% to about 65 wt%.

When the content of the structural unit (b-1) derived from the (meth)acrylonitrile monomer is as described above, a negative electrode with improved adhesive force and improved heat shrinkage rate can be implemented.

As an example, the structural unit derived from the (meth)acrylonitrile monomer may be represented by Chemical Formula 1.

[Chemical Formula 1]

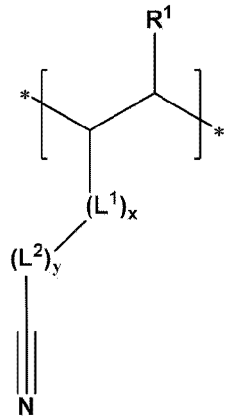

In Chemical Formula 1, R' is hydrogen or a C1 to C3 alkyl group, and $L^1$ is -C(=O)-, -C(=O)O-, -OC(=O)-, -O-, or -C( =O)NH-, and $L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, x is an integer of 0 to 2, and y is an integer of 0 to 2.

As an example, the structural unit derived from the (meth)acrylonitrile monomer may be or include a unit derived from (meth)acrylonitrile, alkenenitrile, cyanoalkyl (meth)acrylate, or 2-(vinyloxy)alkanenitrile.

Herein, the alkene may be or include at least one of a C1 to C20 alkene, a C1 to C10 alkene, and a C1 to C6 alkene, the alkyl may be or include a C1 to C20 alkyl, a C1 to C10 alkyl, and a C1 to C6 alkyl, and the alkane may be or include a C1 to C20 alkane, a C1 to C10 alkane, and a C1 to C6 alkane.

The alkenenitrile may be or include, for example, at least one of allyl cyanide, 4-pentenenitrile, 3-pentenenitrile, 2-pentenenitrile, and 5-hexenenitrile.

The cyanoalkyl (meth)acrylate may be or include, for example, at least one of cyanomethyl (meth)acrylate, cyanoethyl (meth)acrylate, cyanopropyl (meth)acrylate, and cyanooctyl (meth)acrylate.

The 2-(vinyloxy)alkanenitrile may be or include, for example, 2-(vinyloxy)ethanenitrile, or 2-(vinyloxy)propane-nitrile.

## <u>Organic-inorganic Composite Layer</u>

The organic-inorganic composite layer may be or include a layer on the negative electrode active material layer and may be integrated with the negative electrode active material layer.

The organic-inorganic composite layer may be disposed between the anode and the cathode and may be configured as a separator to reduce or prevent a short circuit. Accordingly, the rechargeable lithium battery according to some example embodiments may not include a separate separator. When the rechargeable lithium battery does not include a separate separator, it may no longer be necessary to perform a lamination process to combine the separator and the electrode, so that the battery may be manufactured economically.

In another example, the fact that the organic-inorganic composite layer is integrated with the negative electrode active material layer does not mean that the organic-inorganic composite layer is formed as a separate layer from the negative electrode active material layer, and as the organic-inorganic composite layer is formed directly on the negative electrode active material layer, some of the organic-inorganic composite layer may be smeared onto the negative electrode active material layer and dried, so that the negative electrode active material layer and the organic-inorganic composite layer may be more firmly bonded. In this way, the fact that the organic-inorganic composite layer is integrated with the negative electrode active material layer is such that when measuring the negative electrode with, e.g., a scanning electron microscope (SEM) or other imaging technique, the negative electrode active material layer and the organic-inorganic composite layer may be distinguished, but the interface (boundary portion) between the cathode active material layer and the organic-inorganic composite layer appears in an uneven state such as, e.g., a shape that is not flat.

In various examples, as the organic-inorganic composite layer is integrated with the negative electrode active material layer, the organic-inorganic composite layer may be in a more firmly combined state with the negative electrode active material layer. In addition, polypropylene film, which is typically used as a separator, may change in value due to heat shrinkage when charging and discharging are repeated, and the positive electrode and negative electrode separation function may deteriorate, causing challenges such as, e.g., a short circuit. However, in the negative electrode according to some example embodiments, an organic-inorganic composite layer that can act as a separator may be integrated with the negative electrode active material layer, so that challenges such as, e.g., heat shrinkage, do not occur or occur less often.

In addition, by integrating the organic-inorganic composite layer with the negative electrode active material layer, heat resistance and insulation can be improved while resistance can be reduced. When the organic-inorganic composite layer is not integrated with the negative electrode active material layer, but after forming separate layers are the organic-inorganic composite layer and the negative electrode active material layer are combined, because the organic-inorganic composite layer and the negative electrode active material layer are not integrated, lithium transfer resistance increases, and there may be a disadvantage that an additional process for integration is required.

As an example, the organic-inorganic composite layer may include an organic layer and an inorganic layer.

The organic layer and the inorganic layer may be disposed so that the organic layer is in contact with the negative electrode active material layer, or the inorganic layer may be disposed in contact with the negative electrode active material layer. As another example, the inorganic layer may be in contact with the negative electrode active material layer.

In the negative electrode according to some example embodiments, the negative electrode active material layer and the organic-inorganic composite layer are integrated, so the sizes of the negative electrode active material layer and the organic-inorganic composite layer in the width direction may be substantially the same.

The organic layer may include a heat resistant polymer, and the heat resistant polymer may be a highly heat-resistant engineering resin.

As an example, the heat resistant polymer may include a polymer such as, e.g., at least one of polyethylene (PE), polypropylene (PP), polyester, polyamide, polyimide (PI), polyamideimide (PAI), polyetherimide, polyacrylonitrile (PAN), polyvinylidene fluoride (PVDF), polyvinylidene fluoridehexafluoropropylene (PVDF-HFP), polycarbonate (PC), polyvinyl chloride (PVC), polyvinylidene chloride, polyethylene glycol derivatives, polyoxide, polyvinyl acetate, polystyrene (PS), polyvinylpyrrolidone (PVP), a copolymer thereof, and a combination thereof.

The heat resistant polymer is a non-aqueous polymer, and when an aqueous polymer is used, it may be difficult to form fibers by electrospinning.

The inorganic layer may include inorganic particles and the second binder, and the inorganic particles may include, e.g., at least one of alumina ($Al_2O_3$), boehmite (aluminum oxide hydroxide), zirconia, titania ($TiO_2$), silica ($SiO_2$), and a combination thereof.

Because the organic-inorganic composite layer includes an organic layer and an inorganic layer, the organic-inorganic composite layer can provide a heat resistance effect and flexibility to the negative electrode by including a polymer, especially a heat resistant polymer, thereby reducing or suppressing the possibility that the negative electrode may be damaged during the battery manufacturing process. In addition, the organic-inorganic composite layer is effective in reducing or suppressing the generation of lithium dendrites during charging and discharging, and the effect of increasing heat resistance and mechanical strength can be obtained by including inorganic substances. This effect is typically challenging to obtain when mixing polymers and inorganic materials to form a single layer.

In an example, when the organic layer alone is used, e.g., without the organic-inorganic composite layer, particularly, the organic layer with a woven structure, for example, a network structure alone is included, the positive and negative electrodes may come into direct contact each other, or Li dendrite may be generated during the charge, which may cause a short circuit and thereby, may render the battery inoperable. In the case of including the organic layer alone, even though the organic layer is formed to have a two-layer structure, a similar challenge may arise.

In another example, when the inorganic layer alone is included without including the organic layer, the negative electrode may lack flexibility, which may cause particles of the inorganic material layer to be separated during the battery assembly, leading to the generation of Li dendrites. In addition, the generation of Li dendrites may cause a short circuit, which is disadvantageous.

In various examples, the organic layer may have a woven structure, for example, a network structure, and the organic layer with the network structure may be formed in an electrospinning method. However, a method of forming the organic layer is not limited to the electrospinning method but may include any method capable of forming the organic layer with the network structure.

According to examples, when the organic layer has the woven structure, for example, the network structure, there may be an advantage of reducing or minimizing resistance to Li ion migration. Because the organic layer with the woven structure is present as a porous layer with pores, when the organic layer is formed as a dense layer, a distance for the Li ion migration may be increased, which leads to relatively increasing the resistance to the Li ion migration, and in addition, the organic layer may not be integrated in, and may instead be separated from, the active material layer.

In an example, because the inorganic layer exists as a dense layer, the inorganic layer may be formed, for

example, in an electrospray method. The method of forming the inorganic layer is not limited to the electrospray method but may include any method capable of forming the inorganic layer as a dense layer, for example, a general coating process such as, e.g., a doctor blade, or the like. When the inorganic layer exists as a dense layer, the formation of Li dendrites can be reduced or suppressed more effectively. When the inorganic layer exists as a porous layer, short circuits may occur during charging and discharging thereof.

When the organic layer is first formed, because the organic layer is formed to have a woven shape due to the electrospinning, when the inorganic layer is formed on the organic layer by the electrospraying, a composition for forming the inorganic layer may be inserted into the organic layer, resulting in integrating the organic-inorganic layer with the negative electrode active material layer.

In addition, when the inorganic layer is first formed, a composition for forming the organic layer may be at least partially smeared into the inorganic layer to form an organic-inorganic layer, which may be integrated with the negative electrode active material layer.

The manufacturing method of the negative electrode may be as follows.

The negative electrode active material layer is formed on the current collector. This negative electrode active material layer is formed by mixing the negative electrode active material, the aforementioned first binder, and optionally a conductive material in a solvent to prepare a slurry-type negative electrode active material composition, and coating and drying the negative electrode active material composition to a current collector.

Next, an organic-inorganic composite layer including an organic layer and an inorganic layer is formed on the negative electrode active material layer to manufacture a negative electrode in which the negative electrode active material layer and the organic-inorganic composite layer are integrated.

Regardless of the order of forming the organic layer or the inorganic layer, the organic layer can be formed by electrospinning the composition for forming the organic layer onto the target substrate. The composition for forming the organic layer may include a polymer and a solvent.

The electrospinning process may be, for example, performed by positioning one nozzle pack consisting of tips with a hole size of 23G (gauge) to 30G and a collector roller at a predetermined interval, adding the composition for forming the organic layer to the tips, placing a target substrate on the collector roller, and applying a voltage of about 35 kV to about 50 kV to the tips. The number of the tips may be appropriately adjusted according to types of a polymer included in the composition for forming the organic layer, for example, in a range of about 20 to about 60.

The desired or predetermined distance of the nozzle pack and the target subject may be about 10 cm to about 20 cm.

When the hole size of the tip is 25G to 30G, it is appropriate because an organic layer of the desired shape can be formed.

According to the electrospinning process, the polymer solution is sprayed and stretched in the form of fibers and subsequently spun into a cone shape on the target substrate to form the organic layer. Herein, the composition for forming the organic layer, which is hanging in the form of droplets at the ends of the tips due to surface tension, when a voltage is applied thereto, because a repulsive force of charges occurs, begins to distort in an opposite direction to the surface tension of the solution, and subsequently is sprayed from the tips of the droplets, so that a jet of the composition, also referred to herein as a Taylor cone, may be collected in the collector roller to form the organic layer.

Herein, the electrospinning process may be performed at about 20 °C to about 30 °C under relative humidity of about 40% to about 60%. When the electrospinning process is performed under desired temperature and relative humidity conditions, there may be an advantage in spinning the composition, while maintaining a predetermined thickness of fibers.

In addition, a rolling speed of the collector roller may be adjusted so that the organic layer may be formed to have an appropriate thickness, for example, a thickness in a range of about 1 m/min to about 3 m/min. Furthermore, the composition for forming the organic layer discharged from the tips may be adjusted to discharge a solid content of about 20 $\mu\ell$/min to about 200 $\mu\ell$/min. In addition, interference among the tips may be reduced or minimized to secure uniform electrospinning by appropriately controlling tip air. The tip air may be controlled by flowing compressed air at a pressure of about 0.1 MPa to about 0.2 MPa.

After performing the electrospinning process, a drying process may be performed by using hot air at about 70 °C to about 110 °C.

In the composition for forming the organic layer, the polymer may be used by mixing at least one of the aforementioned polymers, and the solvent may be or include dimethyl acetate, dimethyl formamide, acetone, or a combination thereof.

In examples, the polymer may be the aforementioned heat resistant polymer, and because this heat resistant polymer is non-aqueous, the solvent may be the organic solvent. Accordingly, when an aqueous polymer is used, a water solvent should be used, but because the water solvent is difficult to electrospin, there may be a challenge in possibly damaging electrodes, that is, a spring back problem, but some example embodiments uses the organic solvent and is free from this problem.

In the composition for forming the organic layer, a content of the polymer may be about 5 wt% to about 20 wt%

based on 100 wt% of a total amount of the composition. When the content of the polymer is included within the range, the organic layer may be formed to have an appropriate thickness. When the content of the polymer is less than about 5 wt%, it may be difficult to form fibers during the electrospinning, but when the content of the polymer is greater than about 20 wt%, the tips are hindered or blocked during the electrospinning, making the electrospinning itself impossible or making the fibers non-uniform or too thick.

As the organic layer is formed through the electrospinning, the organic layer may have a woven structure, for example, a network structure. When the organic layer is formed by directly coating the composition or dipping the target subject in the composition rather than the electrospinning, the organic layer may be dense, and an electrode plate may become excessively thick due to the solvent remaining on the electrode plate, which may result in failing to improve energy density per battery volume. In addition, the densely formed organic layer itself may act as a resistance layer and may thus increase resistance to Li ion migration, which may result in deteriorating battery performance. However, as in some example embodiments, when the organic layer is formed through the electrospinning process, the solvent may be well volatilized and thus well reduce or suppress the spring back phenomenon that the solvent damages on the negative electrode.

The inorganic layer may be formed by electrospraying the composition for an inorganic layer. The composition for an inorganic layer may include inorganic particles, the second binder, and a solvent.

The electrospraying process may be, for example, performed by positioning one nozzle pack consisting of tips with a hole size of 23G to 30G and a collector roller at a predetermined interval, adding the composition for an inorganic layer to the tips, placing a target subject on the collector roller, and applying a voltage in a range of about 35 kV to about 50 kV to the tips.

The number of the tips may be appropriately adjusted according to a type and a content of an inorganic material included in the composition for an inorganic layer, etc., and for example, in a range of about 20 to about 60.

The predetermined interval of the nozzle pack and the target subject may be about 10 cm to about 20 cm.

When the tips have a hole size of 25G to 30G, an inorganic layer with a desired shape may be formed.

In the electric spraying process, the inorganic layer forming layer composition is sprayed in the form of dots and sprayed onto the target substrate to form an inorganic layer. When the inorganic layer is formed by directly coating the composition or dipping the target subject in the composition rather than the electrospraying, a thickness of an electrode plate may be excessively increased by the solvent remaining in the electrode plate, failing in appropriately improving energy density per battery volume. In addition, as the inorganic layer is formed through the electrospraying process, the solvent may be sufficiently volatilized and thus sufficiently reduce or suppress the spring back phenomenon that the solvent does a damage on the negative electrode.

In addition, a rolling speed of the collector roller may be controlled to secure an appropriate thickness of the inorganic layer, for example, in a range of about 0.5 m/min to about 3.0 m/min. Furthermore, the composition for an inorganic layer discharged from the tips may be adjusted to discharge a solid content at about 20 $\mu\ell$/min to about 100 $\mu\ell$/min.

In addition, interference of the tips may be reduced or minimized to secure uniform electrospinning by appropriately controlling tip air. The tip air is controlled by flowing compressed air at a pressure of about 0.1 MPa to about 0.2 MPa.

After the electrospraying process, a drying process may be performed with hot air at about 90 °C to about 110 °C.

In the composition for an inorganic layer, the inorganic particles and the second binder are the same as described above, and the solvent may be or include at least one of dimethyl acetate, N-methylpyrrolidone, dimethyl formamide, acetone, and a combination thereof. In the composition for an inorganic layer, a content of the inorganic particles may be about 85 wt% to about 96 wt% based on 100 wt% of a total content of the composition.

After forming the organic-inorganic composite layer, a roll press may be further performed. The roll press process can be performed at about 25 °C to about 110 °C. When the roll press process is further performed, the organic-inorganic composite layer may be compressed to shorten a path for Li ion migration, which may be advantageous for the Li ion migration during the charge/discharge.

In an example, as the composition for an organic layer is electrospun, the composition for forming an organic layer is inserted into the pores naturally formed in the negative electrode active material layer and integrated therewith, and in addition, because the organic layer may have a woven structure, for example, a network structure containing pores, the composition for an inorganic layer may also be inserted into the pores to form an organic-inorganic layer, which may be integrated with the negative electrode active material layer.

In addition, when the inorganic layer is first formed, the composition for the inorganic layer may be inserted into the pores naturally formed in the negative electrode active material layer and thus integrated therewith, and in addition, when the composition for an organic material is electrospun thereon, the composition thereof may be partly smeared into the inorganic layer to form an organic-inorganic layer, which may be integrated with the negative electrode active material layer.

In addition, this integration can occur more effectively by performing the roll press process.

## Rechargeable Lithium Battery

Some example embodiments include a rechargeable lithium battery including the aforementioned negative electrode, positive electrode, and electrolyte.

The rechargeable lithium battery may be classified into cylindrical, prismatic, pouch, coin, and the like depending on their shape.

FIGS. 1 to 4 are schematic views illustrating a rechargeable lithium battery according to some example embodiments. FIG. 1 shows a circular battery, FIG. 2 shows a prismatic battery, and FIGS. 3 and 4 show pouch-type batteries.

Referring to FIGS. 1 to 4, the rechargeable lithium battery 100 includes an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown).

The rechargeable lithium battery 100, in addition to the separator 30 between the positive electrode 10 and the negative electrode 20, and the case 50, may include a sealing member 60 sealing the case 50 as shown in FIG. 1. In addition, in FIG. 2, the rechargeable lithium battery 100 may include a positive lead tab 11, a positive terminal 12, a negative lead tab 21, and a negative terminal 22. As shown in FIG. 3, the rechargeable lithium battery 100 includes a positive electrode tab 71 and a negative electrode tab 72 serving as an electrical path for inducing the current formed in the electrode assembly 40 to the outside. As shown in FIG. 4, the rechargeable lithium battery 100 includes an electrode tab 70,which includes the positive electrode tab 71 and a negative electrode tab 72 illustrated in FIG. 3, the electrode tab 70 being configured to provide an electrical path for inducing the current formed in the electrode assembly 40 to the outside.

The rechargeable lithium battery according to some example embodiments may be used in, or applied to, e.g., automobiles, mobile phones, and/or various types of electric devices, but the present disclosure is not limited thereto.

## Positive Electrode

A positive electrode for a rechargeable lithium battery may include a positive electrode current collector and a positive electrode active material layer formed on the positive electrode current collector. The positive electrode active material layer includes a positive electrode active material and may further include a binder and/or a conductive material.

For example, the positive electrode may further include an additive that may be configured as a sacrificial positive electrode.

The positive electrode active material may include a compound (lithiated intercalation compound) being capable of intercalating and deintercalating lithium. For example, at least one of a composite oxide of lithium and a metal including at least one of cobalt, manganese, nickel, and combinations thereof may be used.

The composite oxide may be or include a lithium transition metal composite oxide, and other examples thereof may include at least one of lithium nickel-based oxide, lithium cobalt-based oxide, lithium manganese-based oxide, lithium iron phosphate-based compound, cobalt-free nickel-manganese-based oxide, and a combination thereof.

As an example, the compounds represented by any one or more of the following chemical formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}O_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above chemical formulas, A is or includes at least one of Ni, Co, Mn, and a combination thereof; X is or includes at least one of Al, Ni, Co, Mn, Cr, Fe, Mg, Sr, V, a rare earth element and a combination thereof; D is or includes at least one of O, F, S, P, and a combination thereof; G is or includes at least one of Al, Cr, Mn, Fe, Mg, La, Ce, Sr, V, and a combination thereof; and $L^1$ is or includes at least one of Mn, Al, and a combination thereof.

For example, the positive electrode active material may be or include a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity and can be applied to a high-capacity, high-density rechargeable lithium battery.

An amount of the positive electrode active material may be about 90 wt% to about 99.5 wt% based on 100 wt% of the positive electrode active material layer, and amounts of the binder and the conductive material may be about 0.5 wt% to about 5 wt%, respectively, based on 100 wt% of the positive electrode active material layer.

The binder may be configured to sufficiently attach the positive electrode active material particles to each other

and also to sufficiently attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be used to impart conductivity to the electrode, and any material that does not cause chemical change and conducts electrons can be used in the battery. Examples of the conductive material may include a carbon-based material such as, e.g., at least one of natural graphite, artificial graphite, carbon black, acetylene black, ketjen black, a carbon fiber, a carbon nanofiber, and carbon nanotube; a metal-based material containing at least one of copper, nickel, aluminum, silver, etc., in a form of a metal powder or a metal fiber; a conductive polymer such as a polyphenylene derivative; or a mixture thereof.

Al may be used as the positive electrode current collector, but the present disclosure is not limited thereto.

## Electrolyte Solution

The electrolyte solution for a rechargeable lithium battery includes a non-aqueous organic solvent and a lithium salt.

The non-aqueous organic solvent may be configured as a medium for transmitting ions taking part in the electrochemical reaction of a battery.

The non-aqueous organic solvent may be or include a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

## Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as at least one of a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of any one polymer polyolefin such as, e.g., at least one of polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, and a copolymer or mixture of two or more thereof.

The organic material may include a polyvinylidene fluoride-based polymer or a (meth)acrylic polymer.

The inorganic material may include inorganic particles including at least one of $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Examples and comparative examples of the present disclosure are described below. However, the following examples are only examples of the present disclosure, and the present disclosure is not limited to the following examples.

## Examples: Manufacture of Negative Electrode for Rechargeable Battery Example 1

95 wt% of graphite and 5 wt% of silicon-carbon composite particles are mixed to prepare a negative electrode active material, and 97.5 wt% of the negative electrode active material is mixed with 1.0 wt% of a first binder and 1.5 wt% of a styrene butadiene rubber (SBR) in a water solvent to prepare negative electrode active material slurry.

The first binder includes 45 wt% of a PAN (poly(acrylonitrile)) binder, 45 wt% of a PAA (poly(acrylic acid)) binder, and 10 wt% of a PEGMA (polyethylene glycol) methylether methacrylate) binder.

The negative electrode active material slurry is coated on a copper current collector, and subsequently dried and compressed to form a negative electrode active material layer.

On the negative electrode active material layer, a composition for an inorganic layer, which includes alumina, a PAN (polyacrylonitrile) binder as a second binder, and a mixed solvent of dimethyl acetate and acetone (in a volume ratio of 1:1), is electrosprayed to form an inorganic layer.

In the composition for forming an inorganic layer, the alumina is included in an amount of 90 wt% based on 100 wt% of a total amount of the inorganic layer composition.

The electrospraying process is performed in the following method.

After placing one nozzle pack consisting of 52 tips with a hole size of 25G and a collector roller at an interval of 15 cm, the composition for forming an inorganic layer is added to the tips, and subsequently electrosprayed at 26 °C under relative humidity of 50% by applying a voltage of 40 kV to 50 kV thereto. Herein, the collector roller is set at a rolling speed of 1 m/min to 3 m/min, and the composition for an inorganic layer is set to discharge a solid content at 100 $\mu\ell$/min from the tips. In addition, the electrospraying is performed by blowing compressed air at a pressure of 0.1 MPa.

After completing the electrospraying, drying with hot air at 90 °C is performed. Subsequently, the composition for forming an organic layer, which includes polyamideimide of a high heat resistance engineering resin and dimethyl acetate of a solvent, is electrospun to form an organic layer.

The electrospinning process is performed in the following method.

After placing one nozzle pack consisting of 52 tips with a hole size of 25G and a collector roller at an interval of 15 cm, the composition for forming an organic layer is added to the tips, and subsequently electrospun at 26°C under relative humidity of 50% by applying a voltage of 40 kV to 50 kV thereto.

Herein, the collector roller is set at a rolling speed of 1 m/min to 3 m/min, and the composition for an organic layer is set to discharge a solid content at 150 $\mu\ell$/min from the tips. In addition, the electrospinning is performed by blowing compressed air at a pressure of 0.1 MPa.

After completing the electrospinning, drying with hot air at 90 °C is performed.

According to the electrospinning, an 8 μm-thick organic layer is formed.

This process provides a negative electrode in which an organic-inorganic composite layer including the organic layer and the inorganic layer is integrated with the negative electrode active material layer.

## Comparative Example 1

95 wt% of graphite and 5 wt% of silicon-carbon composite particles are mixed to prepare a negative electrode active material, and 97.5 wt% of the negative electrode active material, 1.0 wt% of the same first binder as used in Example 1, and 1.5 wt% of a styrene butadiene rubber (SBR) are mixed in a water solvent to prepare negative electrode active material slurry. The negative electrode active material slurry is coated on a copper current collector, and subsequently dried and compressed to manufacture a negative electrode. On the negative electrode active material layer, a polyethylene separator is disposed without forming the organic-inorganic composite layer.

## Comparative Example 2

A negative electrode is manufactured in the same manner as in Example 1 with a difference that carboxylmethyl cellulose (CMC) is used as the first binder.

**Comparative Example 3**

A negative electrode is manufactured in the same manner as in Example 1 with a difference that a polyvinylidene fluoride binder is used as the second binder.

**Comparative Example 4**

A negative electrode is manufactured in the same manner as in Example 1 with a difference that a polyamideimide binder is used as the second binder.

**Evaluation Example 1: Electrode Adhesive Force Analysis**

The negative electrodes according to Example 1 and Comparative Examples 1 to 4 are measured with respect to an adhesive force between negative electrode active material layer and an organic-inorganic composite layer (or between negative electrode active material layer and separation membrane) in the following method.
The adhesive force is measured by peeling each of electrode plate samples with a size of 25 mm*100 mm at a measuring speed of 100 mm/min to a peeling length of 20 mm with a Universal Testing Machine (UTM) tensile strength meter (INSTRON).
The adhesive force measurement results are shown in Table 1.

**Evaluation Example 2: Analysis of Electrode Heat Shrinkage Rate**

The negative electrodes of Example 1 and Comparative Example 1 to 4 are measured with respect to a heat shrinkage rate of organic-inorganic composite layer or separation membrane in the following method. The negative electrodes of Example 1 and Comparative Examples 1 to 4 are cut into a size of a width (MD) 10 cm * a length (TD) 10 cm from the center to prepare samples.
The obtained samples are dotted at an interval of 50 mm in the MD direction and also, at an interval of 50 mm in the TD direction. A median value is a point where two dots in the MD direction perpendicularly meet two dots in the TD.
After allowing each sample to stand in the oven at 150 °C for 60 minutes, an interval between the marked dots is measured to calculate a heat shrinkage rate according to Equation 1, and the results are shown in Table 1.

[Equation 1]

$$\text{Heat shrinkage rate (\%)} = [\,(L_0-L_1)/L_0] * 100$$

($L_0$= initial median interval, $L_1$= median interval after allowed to stand for 1 hour)

(Table 1)

| | First binder | Second binder | Adhesive force (gf/mm) | Heat shrinkage rate (%) (150 °C, 60 min) |
|---|---|---|---|---|
| Example 1 | PAN/PAA/PEGMA | PAN | 0.3 | 0.7 |
| Comparative Example 1 | PAN/PAA/PEGMA | - (separator disposition) | 0 | >50 |
| Comparative Example 2 | CMC | PAN | 0.1 | 1.5 |
| Comparative Example 3 | PAN/PAA/PEGMA | polyvinylidene fluoride | 0.08 | 10 |
| Comparative Example 4 | PAN/PAA/PEGMA | polyamideimide | 0.1 | 8 |

Referring to Table 1, the negative electrode of Comparative Example 1 including a copolymer including a structural unit derived from a (meth)acrylonitrile monomer as the first binder but not including an organic-inorganic composite layer exhibits almost no adhesive force between negative electrode active material layer and polyethylene separation membrane and a high heat shrinkage rate of the separation membrane, compared with the negative electrodes of the examples and thereby, deteriorated heat resistance.
In addition, the negative electrode of Comparative Example 2 including an organic-inorganic composite layer but not including a copolymer including a structural unit derived from a (meth)acrylonitrile monomer as the first binder exhibits

a low adhesive force and a high heat shrinkage rate, compared with that of Example 1.

Furthermore, Comparative Examples 3 and 4, which use a binder not including a copolymer including a structural unit derived from a (meth)acrylonitrile monomer as the second binder, exhibit a low adhesive force and a high heat shrinkage rate, compared with Example 1.

## Preparation Example 1 and Comparative Preparation Examples 1 to 4:

## Manufacture of Rechargeable Lithium Battery Cell

### Preparation Example 1

96 wt% of $LiCoO_2$, 2 wt% of ketjen black, and 2 wt% of polyvinylidene fluoride are mixed in an N-methyl pyrrolidone solvent to prepare positive electrode active material slurry. The positive electrode active material slurry is coated on an Al current collector, and subsequently dried and compressed to manufacture a positive electrode.

The positive electrode is contacted and stacked with the negative electrode of Example 1 to manufacture an electrode assembly. Herein, the organic-inorganic composite layer of the negative electrode is disposed to contact with the positive electrode. The electrode assembly is used with an electrolyte to manufacture a rechargeable lithium battery cell. The electrolyte is prepared by dissolving $LiPF_6$ in a mixed solvent of ethylene carbonate and ethyl methyl carbonate (in a volume ratio of 50:50).

### Comparative Preparation Example 1

96 wt% of $LiCoO_2$, 2 wt% of ketjen black, and 2 wt% of polyvinylidene fluoride are mixed in an N-methyl pyrrolidone solvent to prepare positive electrode active material slurry. The positive electrode active material slurry is coated on an Al current collector, and subsequently dried and compressed to manufacture a positive electrode.

The negative electrode of Comparative Example 1, a polyethylene separator, and the positive electrode are stacked, and subsequently compressed at 90 °C under a load of 270 kg for 10 seconds to manufacture an electrode assembly. This electrode assembly is used with an electrolyte to manufacture a rechargeable lithium battery cell. The electrolyte is prepared by dissolving $LiPF_6$ in a mixed solvent of ethylene carbonate and ethyl methyl carbonate (in a volume ratio of 50:50).

### Comparative Preparation Example 2

A rechargeable lithium battery cell is manufactured in the same manner as in Preparation Example 1 with a difference that the negative electrode of Comparative Example 2 is used.

### Comparative Preparation Example 3

A rechargeable lithium battery cell is manufactured in the same manner as in Preparation Example 1 with a difference that the negative electrode of Comparative Example 3 is used.

### Comparative Preparation Example 4

A rechargeable lithium battery cell is manufactured in the same manner as in Preparation Example 1 with a difference that the negative electrode of Comparative Example 4 is used.

## Evaluation Example 3: Evaluation of High Rate Capability

The rechargeable lithium battery cells according to Preparation Example 1 and the Comparative Preparation Examples 1 to 4 are constant current-charged to 4.4 V at a current of 0.2 C and constant voltage-charged to a current of 0.025 C, while maintaining 4.4 V. The cells, which are constant voltage-charged, are constant current-discharged to 2.75 V at 0.2 C, 0.5 C, 1.0 C, and 2.0 C, and subsequently a ratio of discharge capacity at a C-rate of 2.0 C to discharge capacity at 0.2 C is calculated according to Equation 2 below and shown as discharge rate capability in Table 2.

Discharge rate capability (%) = (Discharge capacity at 2.0 C / Discharge capacity at 0.2C) [Equation 2]

**Evaluation Example 4: Evaluation of Cycle-life Characteristics**

The rechargeable lithium battery cells of Preparation Example 1 and Comparative Preparation Examples 1 to 4 are constant current-charged to a voltage of 4.4 V at a current of 1 C and constant voltage-charged at a current of 0.025 C, while maintaining 4.4 V, at 25 °C. Subsequently, the cells are discharged to a voltage of 2.75 V at a constant current of 1 C, and this charge and discharge is 300 cycles repeated. A ratio of $300^{th}$ discharge capacity to $1^{st}$ discharge capacity is calculated according to Equation 3, and the results are shown as capacity retention (%) in Table 2.

Capacity retention rate (%) = (discharge capacity at $300^{th}$ cycle/discharge capacity at $1^{st}$ cycle]] X 100 [Equation 3]

(Table 2)

| | First binder | Second binder | Discharge rate capability (%, 2.0 C/0.2 C) | Capacity retention rate (%) |
|---|---|---|---|---|
| Preparation Example 1 | PAN/PAA/PEGMA | PAN | 93 | 92.5 |
| Comparative Preparation Example 1 | PAN/PAA/PEGMA | - (separator is disposed) | 85 | 70 |
| Comparative Preparation Example 2 | CMC | PAN | 90 | 88 |
| Comparative Preparation Example 3 | PAN/PAA/PEGMA | polyvinylidene fluoride | 88 | 85 |
| Comparative Preparation Example 4 | PAN/PAA/PEGMA | polyamideimide | 90 | 86 |

Referring to Table 2, the rechargeable lithium battery cell of Preparation Example 1, compared with the rechargeable lithium battery cells of Comparative Preparation Examples 1 to 4, exhibits desired, improved or advantageous high rate capability and cycle-life characteristics and thus desired, improved or advantageous cell characteristics.

While this disclosure has been described in connection with what is presently considered to be practical example embodiments, it is to be understood that the invention is not limited to the disclosed example embodiments, but, on the contrary, is intended to cover various modifications and equivalent arrangements included within the spirit and scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

**1.** A negative electrode (20) for a rechargeable lithium battery (100), the negative electrode (20) comprising

a current collector,
a negative electrode active material layer on the current collector, and
an organic-inorganic composite layer on the negative electrode active material layer and integrated with the negative electrode active material layer,
wherein the negative electrode active material layer includes a negative electrode active material and a first binder,
the organic-inorganic composite layer includes a second binder, and

wherein the first binder and the second binder include a copolymer including a structural unit derived from a (meth) acrylonitrile monomer.

2. The negative electrode (20) as claimed in claim 1, wherein

the structural unit derived from the (meth)acrylonitrile monomer is represented by Chemical Formula 1:

[Chemical Formula 1]

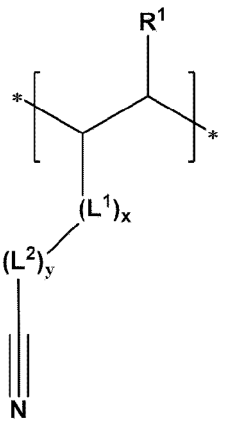

wherein, in Chemical Formula 1,
R' is hydrogen or a C1 to C3 alkyl group,
$L^1$ is -C(=O)-, -C(=O)O-, -OC(=O)-, -O-, or -C(=O)NH-,
$L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
x is an integer in a range of 0 to 2, and
y is an integer in a range of 0 to 2.

3. The negative electrode (20) as claimed in claim 1 or 2, wherein the structural unit derived from (meth)acrylonitrile monomer comprises a unit derived from at least one of (meth)acrylonitrile, alkenenitrile, cyanoalkyl(meth)acrylate, and 2-(vinyloxy)alkanenitrile, wherein preferably the 2-(vinyloxy)alkanenitrile comprises at least one of 2-(vinyloxy) ethanenitrile and 2-(vinyloxy)propanenitrile..

4. The negative electrode (20) as claimed in any of the claims 1 to 3, wherein the alkenenitrile comprises at least one of allyl cyanide, 4-pentenenitrile, 3-pentenenitrile, 2-pentenenitrile, 5-hexenenitrile, and a combination thereof.

5. The negative electrode (20) as claimed in any of the claims 1 to 4, wherein the cyanoalkyl(meth)acrylate comprises at least one of cyanomethyl(meth)acrylate, cyanoethyl(meth)acrylate, cyanopropyl(meth)acrylate, cyanooctyl(meth) acrylate, and a combination thereof.

6. The negative electrode (20) as claimed in any of the claims 1 to 5, wherein the first binder comprises the copolymer including the structural unit derived from the (meth)acrylonitrile monomer and a structural unit derived from a (meth) acrylic acid-based monomer.

7. The negative electrode (20) as claimed in any of the claims 1 to 6, wherein the structural unit derived from the (meth) acrylonitrile monomer is included in an amount of about 35 wt% to about 65 wt% based on 100 wt% of the copolymer.

8. The negative electrode (20) as claimed in any of the claims 1 to 7, wherein the structural unit derived from a (meth) acrylic acid-based monomer is included in an amount of about 35 wt% to about 65 wt% based on 100 wt% of the copolymer.

9. The negative electrode (20) as claimed in any of the claims 1 to 8, wherein the copolymer further comprises a structural unit derived from a hydroxyl group-containing monomer or an amide group-containing monomer.

**10.** The negative electrode (20) as claimed in any of the claims 1 to 9, wherein the first binder further comprises a binder including at least one of a styrene-butadiene rubber, a (meth)acrylated styrene-butadiene rubber, a (meth)acrylonitrile-butadiene rubber, a (meth)acrylic rubber, a butyl rubber, polyethylene oxide, polyvinylpyrrolidone, polyepichlorohydrin, polyphosphazene, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

**11.** The negative electrode (20) as claimed in any of the claims 1 to 10, wherein the structural unit derived from the (meth) acrylonitrile monomer is included in an amount of about 35 wt% to about 65 wt% based on 100 wt% of the copolymer included in the second binder.

**12.** The negative electrode (20) as claimed in any of the claims 1 to 11, wherein the negative electrode active material comprises at least one of a carbon-based negative electrode active material and a Si-based negative electrode active material, whereby preferably the Si-based negative electrode active material is included in an amount of about 0.1 wt% to about 10 wt% based on total weight, 100 wt% of negative electrode active material and/or the Si-based negative electrode active material comprises a silicon-carbon composite, whereby preferably the silicon-carbon composite comprises a core including silicon particles, and a carbon coating layer on the surface of the core.

**13.** The negative electrode (20) as claimed in any of the claims 1 to 12, wherein the organic-inorganic composite layer comprises an organic layer and an inorganic layer, whereby preferably the organic layer comprises a polymer including at least one of polyethylene (PE), polypropylene (PP), polyester, polyamide, polyimide (PI), polyamideimide (PAI), polyetherimide, polyacrylonitrile (PAN), polyvinylidene fluoride (PVDF), polyvinylidene fluoridehexafluoropropylene (PVDF-HFP), polycarbonate (PC), polyvinyl chloride (PVC), polyvinylidene chloride, polyethylene glycol derivatives, polyoxide, polyvinyl acetate, polystyrene (PS), polyvinylpyrrolidone (PVP), a copolymer thereof, and a combination thereof and/or preferably the inorganic layer comprises inorganic particles and the second binder, the inorganic particles include at least one of alumina ($Al_2O_3$), boehmite (aluminum oxide hydroxide), zirconia, titania ($TiO_2$), silica ($SiO_2$), and a combination thereof.

**14.** The negative electrode (20) as claimed in any of the claims 1 to 13, wherein:

the organic layer is in a woven form, and
the inorganic layer is a dense layer.

**15.** A rechargeable lithium battery (100), comprising:

the negative electrode (20) as claimed in any of the claims 1 to 14;
a positive electrode (10); and
an electrolyte.

FIG. 1

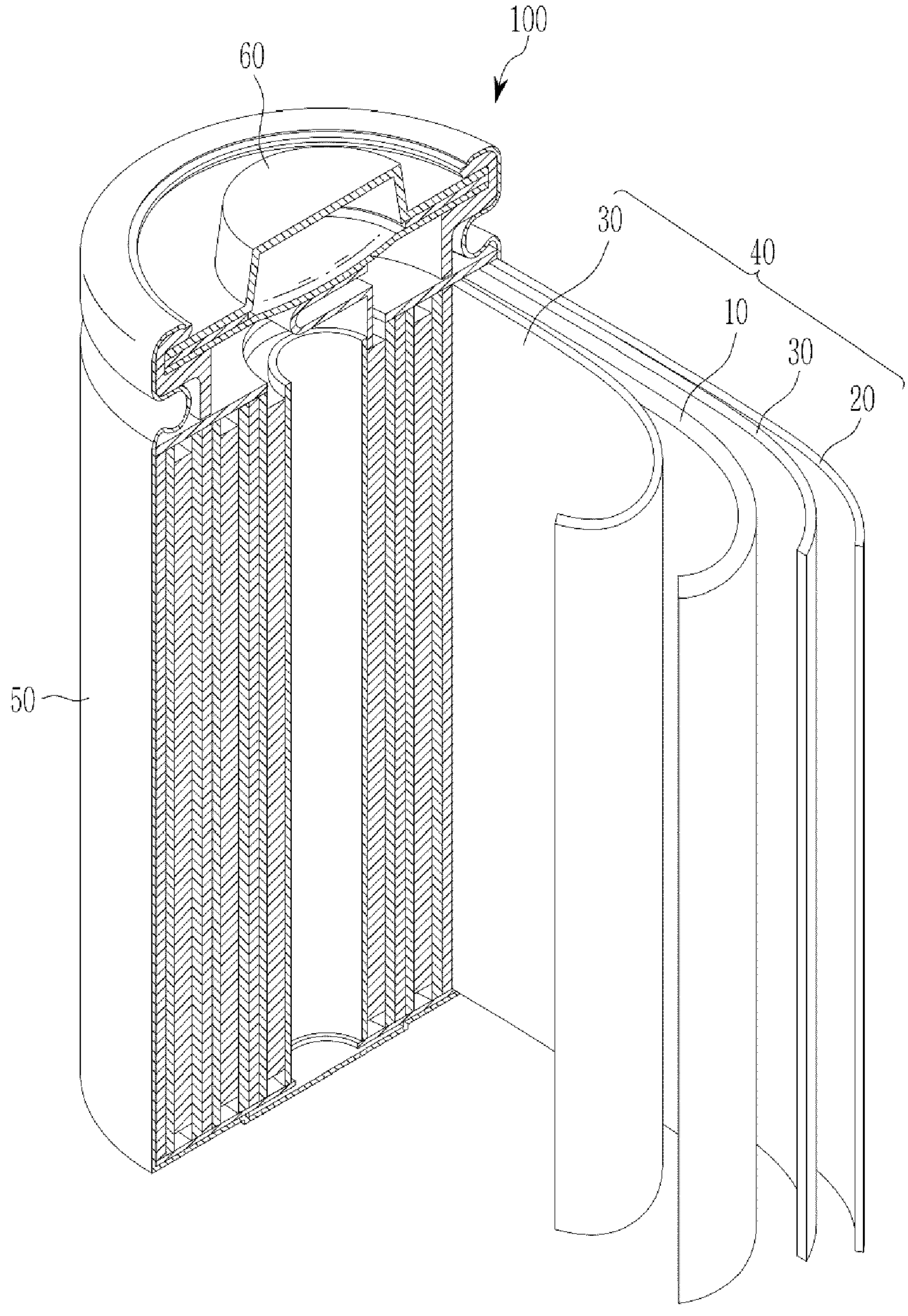

FIG. 2

100

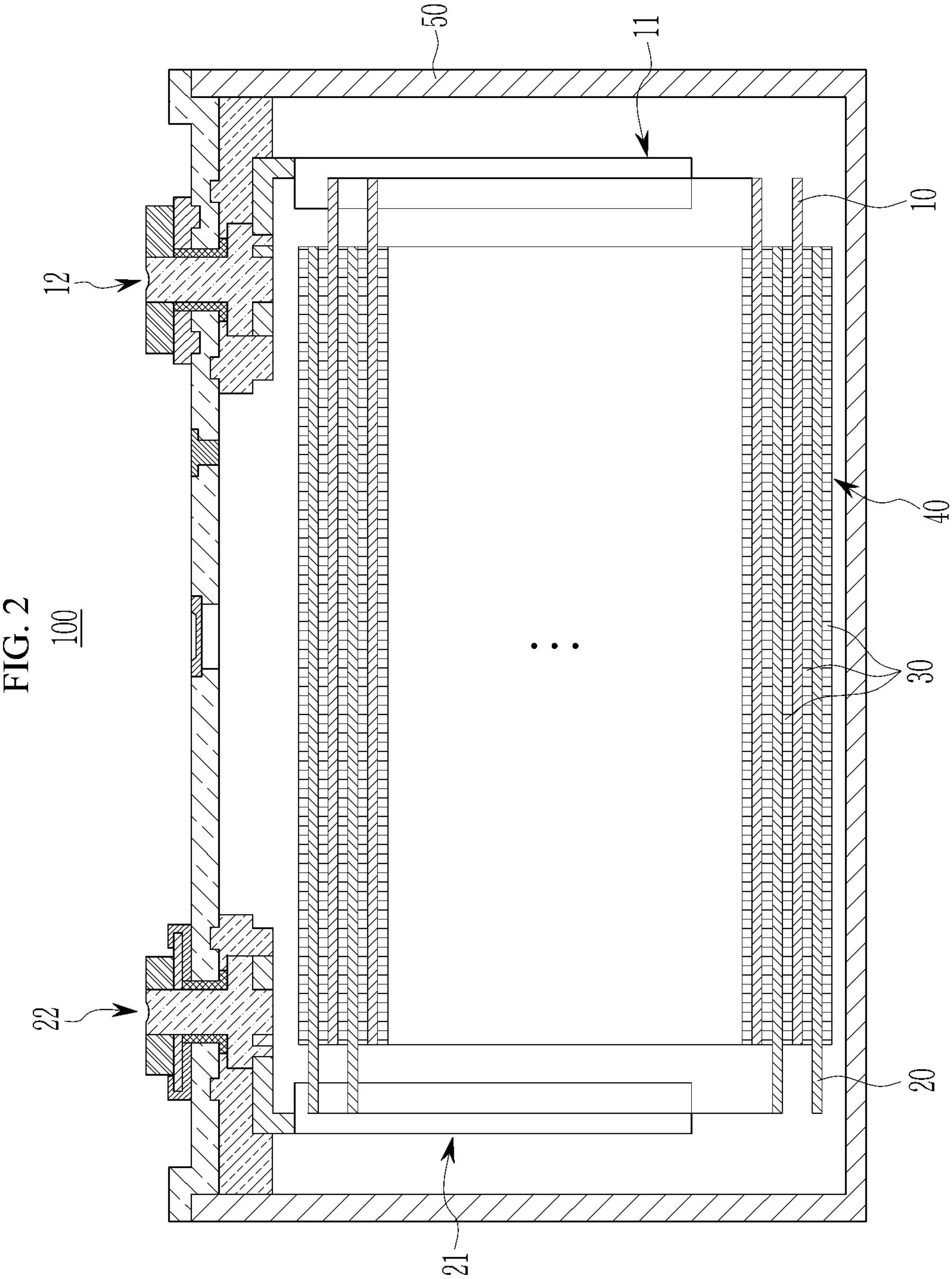

FIG. 3

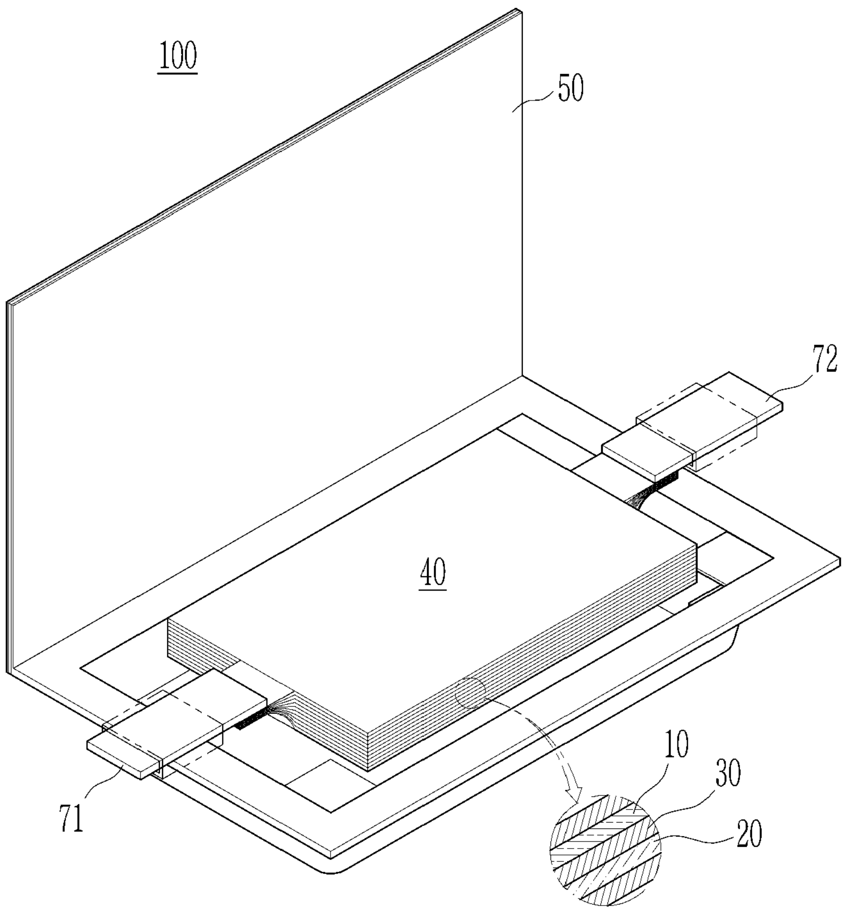

FIG. 4

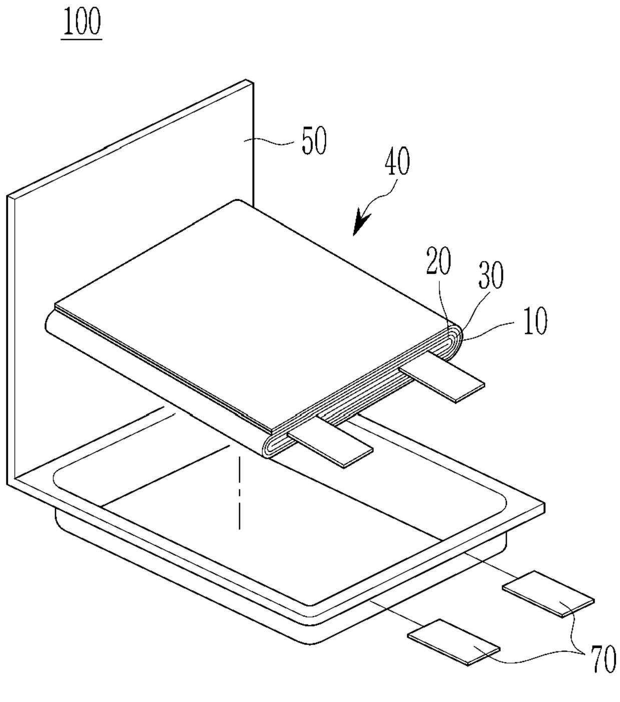

Europäisches Patentamt
European Patent Office
Office européen des brevets

# EUROPEAN SEARCH REPORT

Application Number
EP 24 21 1241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/290958 A1 (LEE JINHEE [KR] ET AL) 14 September 2023 (2023-09-14)<br>* claims; examples; paragraphs 52-55 and 71 *<br>----- | 1-15 | INV.<br>H01M4/13<br>H01M4/62<br>H01M10/0525 |
| Y | US 2015/194678 A1 (JEONG BONG HYUN [KR] ET AL) 9 July 2015 (2015-07-09)<br>* claims; examples *<br>----- | 1-15 | ADD.<br>H01M4/1397<br>H01M4/04<br>H01M4/131 |
| Y | KR 2022 0049447 A (SAMSUNG SDI CO LTD [KR]) 21 April 2022 (2022-04-21)<br>* claims; examples; paragraph 94 *<br>----- | 1-15 | H01M4/133<br>H01M4/134<br>H01M4/136<br>H01M4/1391 |
| Y | JP 2013 098139 A (HITACHI CHEMICAL CO LTD) 20 May 2013 (2013-05-20)<br>* claims; examples*<br>----- | 1-15 | H01M4/1393<br>H01M4/36<br>H01M4/02<br>H01M4/38 |
| A | US 2013/337324 A1 (YOKOI MAI [JP] ET AL) 19 December 2013 (2013-12-19)<br>* claims; examples *<br>----- | 1-15 | H01M4/1395 |
| | | | TECHNICAL FIELDS SEARCHED (IPC) |
| | | | H01M |

1

The present search report has been drawn up for all claims

| Place of search | Date of completion of the search | Examiner |
|---|---|---|
| Munich | 13 March 2025 | Okunowski, Françoise |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 21 1241

This annex lists the patent family members relating to the patent documents cited in the above-mentioned European search report. The members are as contained in the European Patent Office EDP file on
The European Patent Office is in no way liable for these particulars which are merely given for the purpose of information.

13-03-2025

| Patent document cited in search report | Publication date | Patent family member(s) | Publication date |
|---|---|---|---|
| US 2023290958 A1 | 14-09-2023 | EP 4239749 A1 | 06-09-2023 |
| | | KR 20220135527 A | 07-10-2022 |
| | | US 2023290958 A1 | 14-09-2023 |
| | | WO 2022211278 A1 | 06-10-2022 |
| US 2015194678 A1 | 09-07-2015 | CN 104904049 A | 09-09-2015 |
| | | JP 6098852 B2 | 22-03-2017 |
| | | JP 2016505203 A | 18-02-2016 |
| | | US 2015194678 A1 | 09-07-2015 |
| | | WO 2015102140 A1 | 09-07-2015 |
| KR 20220049447 A | 21-04-2022 | JP 2022064465 A | 26-04-2022 |
| | | KR 20220049447 A | 21-04-2022 |
| JP 2013098139 A | 20-05-2013 | JP 5760966 B2 | 12-08-2015 |
| | | JP 2013098139 A | 20-05-2013 |
| US 2013337324 A1 | 19-12-2013 | CN 103443970 A | 11-12-2013 |
| | | JP WO2012124525 A1 | 24-07-2014 |
| | | US 2013337324 A1 | 19-12-2013 |
| | | WO 2012124525 A1 | 20-09-2012 |

EPO FORM P0459

For more details about this annex : see Official Journal of the European Patent Office, No. 12/82